# EUROPEAN PATENT APPLICATION

(11) **EP 4 477 626 A1**
(43) Date of publication of application: **18.12.2024**
(21) Application number: 23382586.8
(22) Date of filing: 13.06.2023
(51) Int. Cl.: C02F 1/00, C02F 3/28, C12M 1/107, C12M 1/00, C02F 3/00, C02F 103/32

(54) **REACTOR FOR HIGH-PERFORMANCE MULTI-STAGE ANAEROBIC SYSTEM**

(71) Applicant: Agua, Energia y Medio Ambiente Servicios Integral S.L.U., 26540 Alfaro (La Rioja) (ES); Instituto Tecnológico De Aragón, 50018 Zaragoza (ES)
(72) Inventor: González Iglesias, Juan Carlos, Alfaro (ES); Carbajo Elena, José Benito, Alfaro (ES); Miana Sanz, Mario Jacobo, Zaragoza (ES); García Sainz, Gorka, Alfaro (ES); Marín Oscoz, Borja, Alfaro (ES); Martínez Santamaría, Ana, Zaragoza (ES); Martínez Pérez, Roberto, Alfaro (ES); Navajas Torrero, María, Alfaro (ES); Bengoechea Cuadrado, Cristina, Zaragoza (ES); Cascante Lafuente, Pablo, Alfaro (ES); Jimenez Rivas, David, Alfaro (ES); Alfaro Isac, Carmen Eugenia, Zaragoza (ES); Juan Alejandre, Asier, Zaragoza (ES); Izquierdo Estallo, Salvador, Zaragoza (ES)
(74) Representative: González López-Menchero, Álvaro Luis

(57) **Abstract**

A reactor comprising:
- a reactor core having a cylindrical configuration that has several chambers separated from one another by means of baffles with an inclination comprised between 10° and 20° with a slenderness ratio (H/D) that is comprised between 1.3 and 5, and the chambers of which have an aspect ratio of (D/h) comprised between 1 and 3, and it also has an influent distributor placed at the bottom of the reactor core,
- A connection area having a frustoconical shape.
- A gas-liquid-solid separation system which houses therein a lamella clarifier (10) under which there is a series of baffles (11) that direct the released gas towards the upper part of the three-phase separator, the gases being extracted through the gas outlet conduit (12).

As a result of the design of the reactor, it is possible to: avoid gas recirculation, improve influents and retention, and 95% efficiency.

## Description

### OBJECT OF THE INVENTION

The object of the present invention, as the title of the invention establishes, is a reactor for a high-performance multi-stage anaerobic system for the treatment of wastewater with a high organic matter content.

The present invention is characterized by the special design and configuration of each and every one of the parts forming the system in such a way that it achieves 95% degradation of the organic load of the wastewater, that is, it presents a very high efficiency in the anaerobic clarification process.

Therefore, the present invention is circumscribed within the scope of reactors for anaerobic systems that comprise a reactor and an assembly for separating solids, liquids, and gases.

### BACKGROUND OF THE INVENTION

Food and beverage producing companies are a highly intensive sector in the use of water resources worldwide, a fact that produces a significant volume of wastewater. Its industrial effluents are characterized by a high concentration of biodegradable organic matter, which results in significant environmental pressure.

High-rate anaerobic systems appear as a sustainable process, both economically and environmentally, for the treatment of high-load wastewater. However, although most of these large-scale reactors are used to treat agro-industrial effluents, these anaerobic systems are only optimized for large companies where economies of scale make investment in this technology affordable. In contrast, the food and beverage sector, dominated by small and medium-sized enterprises (SMEs), do not discharge enough organic load to make existing anaerobic reactors economically viable.

The Blenke cascade reactor or cascade system is known in the prior art as a special configuration of the artificial gas lift reactor. The common artificial gas lift reactor is usually a straight column, having high axial mixing and behaving like a single continuous stirred tank reactor. This system was created for continuous fermentation.

The cascade concept is based on a method for the transfer of mass and/or energy, where several chambers are interconnected with an opening. The fluid material passes through these chambers, which are fluidly connected in series and structured in the form of a tower (overlapping cascade). The gas introduced at the lower part of the column creates toroidal vortices in the fluid chambers between the inserts, improving mixing and residence time behavior without the need for stirring equipment.

The structure of this reactor makes it possible to partially separate some steps of the anaerobic digestion process as the result of a series of baffles that force the flow of wastewater. Extending the contact time with the granular biomass improves the anaerobic digestion treatment.

In the state of the art, the multiphase anaerobic reactor described in patent ES-2541078-B1 is known, said patent disclosing a modified EGSB (expanded granular sludge bed) reactor made of stainless steel where the multiphase anaerobic reactor is designed based on two separate main components: a main reactor body and a gas-liquid-solid separator system (GLSS).

The interior of the main reactor body includes baffle modules configured to generate a cascade phenomenon. Said baffle modules are designed to be adjusted to various inclinations with respect to the supporting surface of the reactor. The inclusion of the deflection modules in the main body of the reactor makes it possible to form as many chambers therein as there are deflection modules plus one, being able to vary the number of deflection modules, and with it the shaped chambers, thus being adapted to particular applications or to the process conditions.

The gas-liquid-solid separator system essentially consists of two cones located one above the other and open at the lower part, against which the particles impact, being forced to pass through an opening and being redistributed inside the reactor.

At the same time, the liquid flows flow upwards, towards the upper cone. The trapped biogas that accumulates on the sides is directed towards the outside of the reactor. The separator allows the collection and recirculation of the gaseous and liquid streams, in addition to the redistribution of the solid biomass in the body of the reactor.

Mass transfer is ensured through gas recirculation, using a biogas compressor, combined with liquid recirculation, by means of a pump. The recirculation ratio to the inflow is selected based on the hydrodynamic properties of the reactor and residence time distribution theory.

However, said system has aspects that can be improved, such as achieving greater degradation efficiency, in addition to avoiding the recirculation of biogas, in order to improve the industrial safety of the installation, and having a distribution system for distributing the influent therein, where the ascent speed is such that the anaerobic granules remain suspended.

Therefore, it is the object of the present invention to develop an anaerobic reactor that overcomes the previous difficulties and achieves the aspects that can be improved by developing an anaerobic reactor as described below and essentially included in the first claim.

### DESCRIPTION OF THE INVENTION

The essential features of the object of the present invention is described in the independent claim and the different embodiments are described in the dependent claims.

The object of the present invention is a reactor for a high-performance multi-stage anaerobic system, characterized in that it comprises:
- a reactor core having a cylindrical configuration that is divided into several chambers connected to one another, arranged one above the other and separated from each other by means of baffles, where the reactor core has a slenderness ratio (H/D) that is comprised between 1.3 and 5, and the chambers have an aspect ratio (D/h) between 1 and 3, and it further has an influent distributor placed at the bottom of the reactor core. The chambers are connected through two openings with a passage opening, in a preferred but non-limiting embodiment, between 5% and 1% of the surface of the baffle and arranged in the lower and upper areas of the baffle. The baffles are installed with an inclination (α) comprised between 10° and 20° in relation to the perpendicular to the reactor wall.
- A connection area arranged in the upper part of the reactor core having a frustoconical shape.
- A gas-liquid-solid separation system housed in a cylinder placed on the connection area used to collect, separate and discharge the biogas produced, reduce liquid turbulence in the clarifier compartment to improve sludge settling, as well to recover the sludge particles through a settling mechanism, which slide towards the reactor core.

The cylinder that houses the separation system has a diameter greater than the diameter of the reactor core. This geometry causes a drop in the upward flow speed of the wastewater to achieve optimal hydrodynamic conditions for the solid-liquid-gas separation.

The headspace of the anaerobic reactor has four air dosing points to carry out direct microaeration, a biosulfidation technique for the oxidation of sulfide to elemental sulfur or sulfate. In addition, two vertical tubes, calibrated to the maximum allowable working pressure of the reactor, are installed in this headspace area of the separation system to ensure safe and reliable operation.

The means used to maintain the sludge in the reactor consist of a lamella clarifier, which in a preferred embodiment is formed by corrugated plates, to increase its surface, and made of polyvinyl chloride.

As a result of the described features, compared to the most closely related prior art anaerobic reactors for wastewater, the following advantages are achieved:
- On the one hand, it is not necessary and there is no recirculation of the biogas, that is, it is not reinjected into the reactor; this was being done to achieve homogenization of the liquid and the anaerobic biomass inside the reactor.
- On the other hand, a lower reactor is achieved, where the reactor core has a slenderness ratio of (H/D) that is comprised between 1.3 and 5; this allows optimal maintenance of the solid-gas-liquid mixture, as shown through hydrodynamic studies carried out, which facilitates construction.
- The distribution of influents is improved due to the location and design of the distribution system.
- All the previous aspects put together and contributing to each other manage to obtain an efficiency of 95% degradation of the organic load, compared to those of the prior art which obtain 80-90% efficiency.
- Clearly reduced manufacturing, operation and maintenance costs, being able to have work volumes ranging from 50 to 1000 m³, which makes the reactor affordable for SMEs, since the high efficiency of the system reduces investment returns (i.e., low CAPEX and high OPEX reduction).

All the design values obtained, aspect ratio, number of chambers, number of baffles, design of the influent distributor, design of the lamella clarifier, baffles below the clarifier are the result of hydrodynamic studies and experimentation and all of them come together in a result such as that has just been described.

Except when indicated otherwise, all of the technical and scientific elements used in this specification have the meaning commonly understood by a person skilled in the art to which this invention belongs. When this invention is put into practice, methods and materials may be used that are similar or equivalent to the ones described in this specification.

Throughout the description and in the claims, the word "comprises" and its variants are not intended to exclude other technical characteristics, additives, components or steps. For those skilled in the art, other objects, advantages and features of the invention may be deduced from both the description and the practical use of the invention.

### EXPLANATION OF THE FIGURES

As a complement to the present description, and for the purpose of helping to make the features of the invention more readily understandable, in accordance with a preferred practical exemplary embodiment thereof, said description is accompanied by a set of drawings constituting an integral part of the same, which by way of illustration and not limitation represent the following.
Figure 1 shows a front view of the reactor object of the invention.
Figure 2 shows the influent distribution system placed at the bottom of the reactor core.
Figures 3, 4 and 5 show different views and a view sectioned by a vertical plane that diametrically cuts the reactor.
Figure 6 shows a perspective view of the lamellar clarifier housed within the three-phase separation system.

### PREFERRED EMBODIMENT OF THE INVENTION

With reference to the figures, a preferred embodiment of the invention proposed is described below.

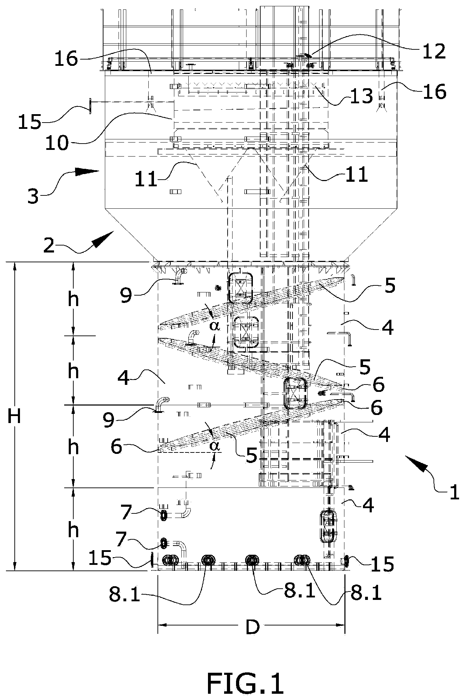

Figure 1 shows that the reactor for a high-performance multi-stage anaerobic system comprises, on the one hand, a reactor core (1), a transition element (2) placed on the upper end of the reactor core (1) in the form of an inverted truncated cone and a gas-liquid-solid separator system (3) arranged on the transition element (2).

The reactor core (1) has a cylindrical configuration with a slenderness ratio of 1.3 to 5, the interior of which, in the embodiment shown and without being limiting, is divided into four chambers (4) arranged one above the other and separated from one another by means of three baffles (5) with an inclination comprised between 10° and 20° in relation to the perpendicular of the wall of the reactor core.

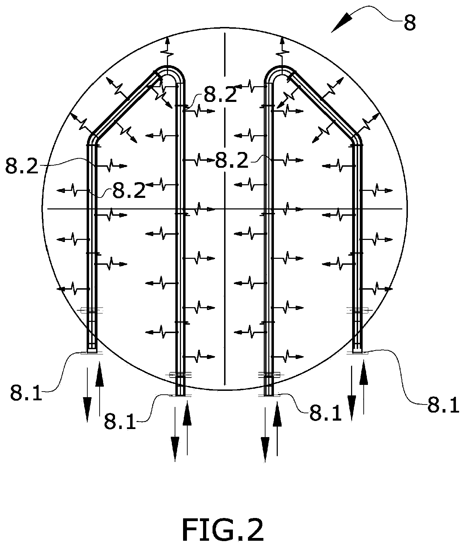

In the lower part of the reactor core (1) there are inlet and outlet ports (15), in addition to connection ports (8.1) of the influent distributor (8) (Figure 2).

The baffles (5) have connection openings in their upper and lower area comprised between 5% and 1% of the surface and said openings are arranged in their lower and upper area, respectively, allowing the connection between the chambers (4). In addition, on the influent distribution system there are inlet ports (7) for seeding or purging the granular biomass in charge of carrying out the anaerobic digestion; there are also second inlet ports (9) on each of the upper chambers used as seeding or purging points.

The gas-liquid-solid or three-phase separation system (3) is the space where the separation of gases, liquids and solids takes place. It has a cylindrical configuration with a diameter greater than the diameter of the reactor core.

There is housed inside the three-phase separator (3) a lamella clarifier (10) under which there is a series of baffles (11) that direct the released gas towards the upper part of the three-phase separator, the gases being extracted through the gas outlet conduit (12).

Inside the three-phase separator there is a clarified water collector (13), which clarified water is evacuated from the reactor through the effluent conduit (15).

Figure 2 shows the influent distributor (8) that has two independent circuits, each with an inlet and outlet (8.1) having a reversible configuration and through which water is injected and exits through holes (8.2) arranged close to the floor of the reactor core, so that a homogeneous distribution of granular biomass in the water is achieved, which results in better mass transfer and greater degradation efficiency. This allows, in turn, to have better fluid dynamics due to the contribution of the biogas generated in the anaerobic degradation.

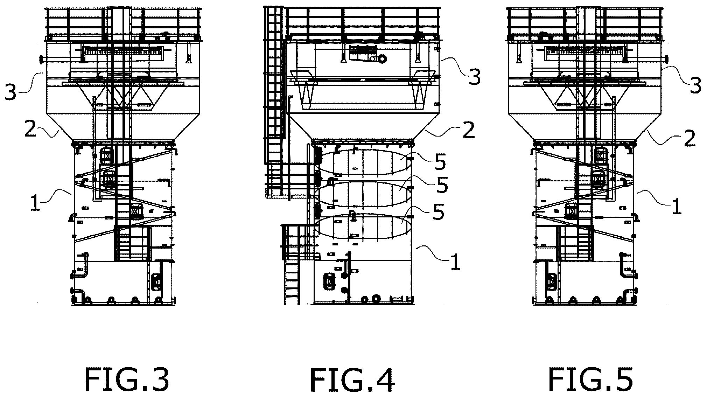

It should be noted in Figure 4 how the baffles (5), when showing a section obtained by cutting the reactor along a vertical plane that cuts the diameter of the reactor, show an ellipsoidal shape.

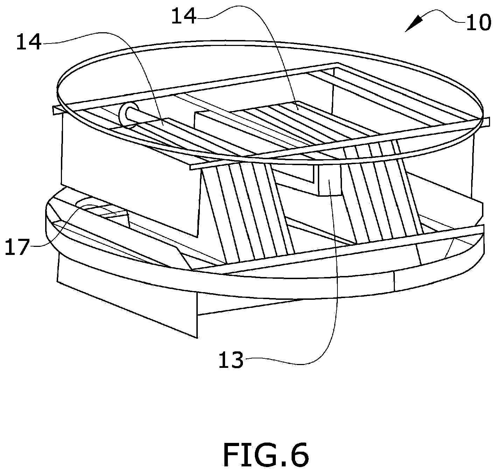

Figure 6 shows the lamella clarifier (10) which, as can be seen, has two parallel lamellae packs (14) with a clarified water collector weir (13) being arranged between them.
The headspace of the anaerobic reactor has four air dosing points to carry out direct microaeration, a biosulfidation technique for the oxidation of sulfide to elemental sulfur or sulfate. In addition, two vertical tubes (16), calibrated to the maximum allowable working pressure of the reactor, are installed in this headspace area of the reactor to ensure safe and reliable operation.

In a possible embodiment, each lamellae pack is made up of corrugated polyvinyl chloride or polypropylene plates, spaced apart +-5 cm apart, forming an angle with the horizontal of between 45° and 60°, which are supported on a 316L stainless steel frame. The number of lamellae of the two packs is defined by the area that ensures a sludge settling rate of 0.21 m/h. The sludge returns to the reactor core by gravity, without the need for added energy, sliding along the baffles (11) that have an inclination comprised between 50° and 60° with respect to the horizontal of the gas dome, which have an opening (less than 70 mm) in the lower part to avoid turbulence.

Wastewater enters the unit through a special inlet construction, designed to distribute the flow equally over the lamella clarifier (17). The water enters a "cross flow" unit on the inlet side and flows through the pack (14). The hydraulic design of the separator ensures a uniform and constant flow, causing an optimal clarification. The treated water leaves the separator through the overflow construction through a weir (13) with V-shaped notches.

Having thus adequately described the nature of the present invention, as well as how to put it into practice, it must be noted that, within its essential nature, the invention may be carried out according to other embodiments differing in detail from that set out by way of example, which the protection sought would equally cover, provided that the fundamental principle thereof is not altered, changed or modified.

## Claims

1. A reactor for a high performance anaerobic system of the type comprising:
- a reactor core (1);
- a connection area (2) arranged in the upper part of the reactor core and having a truncated cone shape; and
- a gas-liquid-solid separation system (3) housed in a cylinder placed on the connection area (2) and used to collect, separate and discharge the biogas produced, where the cylinder that houses the separation system has a diameter greater than the diameter of the reactor core (1), which houses therein a lamella clarifier (10) under which there is a series of baffles (11) that direct the released gas towards the upper part of the three-phase separator, the gases being extracted through the gas outlet conduit (12);
said reactor **characterized in that** it comprises:
- a reactor core (1) having a cylindrical configuration divided into several chambers (4) arranged one above the other and separated from each other by means of baffles (5), the reactor core having a slenderness ratio (H/D) that is comprised between 1.3 and 5, and the chambers of which have an aspect ratio of (D/h) comprised between 1 and 3, and further being equipped with an influent distributor (8) arranged in the lower part of the reactor core (1), where the chambers are connected to each other through two openings (6) with a passage opening, in a preferred but non-limiting embodiment, comprised between 5% and 1 % of the baffle surface and arranged in the lower and upper areas of the baffle, the baffles being installed with an inclination (α) comprised between 10° and 20° where angle (α) is in relation to the perpendicular to the wall of the reactor.

2. The reactor for a high-performance multi-stage anaerobic system according to claim 1, **characterized in that** the lamella clarifier (10) has two parallel lamellae packs (14) with a clarified water collection weir (13) being arranged between the two parallel lamellae packs. (14).

3. The reactor for a high-performance multi-stage anaerobic system according to claim 2, **characterized in that** each parallel lamellae pack is made up of corrugated of polyvinyl chloride or polypropylene plates, spaced apart +- 5 cm, forming an angle with the horizontal of between 45 and 60°, which are supported on a frame.

4. The reactor for a high-performance multi-stage anaerobic system according to any of the preceding claims, **characterized in that** the baffles (11) of the gas dome have an inclination comprised between 50° and 60° with respect to the horizontal.
